# EUROPÄISCHE PATENTSCHRIFT

(11) **EP 2 300 258 B1**
(45) Veröffentlichungstag und Bekanntmachung des Hinweises auf die Patenterteilung: **16.10.2013**
(21) Anmeldenummer: 09765485.9
(22) Anmeldetag: 15.05.2009
(51) Int. Cl.: B60K 35/00

(54) **KOMMUNIKATIONSSYSTEM UND VERFAHREN ZUR DARSTELLUNG VON INFORMATIONEN BEI EINER KOMMUNIKATION**
COMMUNICATION SYSTEM AND METHOD FOR REPRESENTING INFORMATION IN A COMMUNICATION
SYSTEME DE COMMUNICATION ET PROCEDE DE REPRESENTATION D'INFORMATIONS PENDANT UNE COMMUNICATION

(30) Priorität: 16.06.2008 DE 102008028512
(43) Veröffentlichungstag der Anmeldung: 30.03.2011
(73) Patentinhaber: Audi AG, 85045 Ingolstadt (DE)
(72) Erfinder: SELLSCHOPP, Stefan, 85221 Dachau (DE); NICOLESCU, Valentin, 80804 München (DE); KRCMAR, Helmut, 85402 Kranzberg (DE)
(74) Vertreter: Brandt, Kai
(86) Internationale Anmeldenummer: PCT/EP2009/003473
(87) Internationale Veröffentlichungsnummer: WO 2009/152905

(56) Entgegenhaltungen:
- WO-A-2007/054284
- DE-A1-102006 049 965
- US-A1- 2008 127 256

## Beschreibung

Die Erfindung betrifft ein Kommunikationssystem mit einer Anzeigeeinheit und einem virtuellen Wesen, welches auf der Anzeigeeinheit visuell darstellbar ist und zur Kommunikation mittels natürlicher Sprache mit einer natürlichen Person ausgebildet ist. Des Weiteren betrifft die Erfindung ein Verfahren zur Darstellung von Informationen bei einer Kommunikation zwischen einem virtuellen Wesen und einer natürlichen Person.

Aus der DE 10 2006 049 965 A1 ist eine Vorrichtung und ein Verfahren zur interaktiven Informationsausgabe und/oder Hilfestellung für einen Benutzer eines Kraftfahrzeugs bekannt. Zur Präsentation der ausgegebenen Information kann von einer Erklärungseinheit eine aus einer Mehrzahl von verfügbaren Arten der Informationsausgabe in Abhängigkeit der Fahrsituation und/oder des Fahrerwunsches ausgewählt und eingesetzt werden. Die Vorrichtung und das Verfahren ermöglichen jedoch nur eine sehr beschränkte Möglichkeit der Dialogflexibilität und der individuellen Gestaltung der Kommunikation.

Es ist Aufgabe der vorliegenden Erfindung, ein Kommunikationssystem und ein Verfahren zu schaffen, mit welchen die Kommunikation flexibler und variabler gestaltet werden kann. Insbesondere individuelle Wünsche der natürlichen Person während der Kommunikation sollen flexibler und variabler ermöglicht und realisiert werden können, so dass die Informationsübermittlung bei der Kommunikation sicherer und zuverlässiger erfolgen kann und nachvollziehbarer wird.

Diese Aufgabe wird durch ein Kommunikationssystem, welches die Merkmale nach Anspruch 1 aufweist, und ein Verfahren, welches die Merkmale nach Anspruch 14 aufweist, gelöst.

Ein erfindungsgemäßes Kommunikationssystem umfasst eine Anzeigeeinheit und ein virtuelles Wesen, welches zur Informationspräsentation oder zur unterstützenden Informationspräsentation auf der Anzeigeeinheit visuell darstellbar ist. Das Kommunikationssystem und somit auch das virtuelle Wesen ist zur Kommunikation mittels natürlicher Sprache mit einer natürlichen Person ausgebildet. Es kann somit ein natürlich sprachlicher Dialog zwischen dem virtuellen Wesen und der natürlichen Person durchgeführt werden. Das Kommunikationssystem umfasst darüber hinaus zumindest ein Interaktionssymbol, welches auf der Anzeigeeinheit visuell darstellbar ist und mittels welchem der natürlich sprachliche Dialog zwischen dem virtuellen Wesen und der natürlichen Person unterstützt ist, derart, dass ein erreichter Dialogzustand zwischen dem virtuellen Wesen und der natürlichen Person auf der Anzeigeeinheit darstellbar ist bzw. anzeigbar ist und/oder abhängig vom erreichten Dialogzustand zusätzliche Informationen und/oder Informationen redundant abrufbar sind.

Es wird somit ein Kommunikationssystem geschaffen, bei dem der natürlichen Person eine zusätzliche visuelle Orientierungshilfe durch das Interaktionssymbol dahingehend dargestellt wird, dass die natürliche Person insbesondere während eines Dialogs weiß, an welcher Stelle eines Dialogs man sich befindet und somit welcher Dialogzustand erreicht ist. Insbesondere ist es darüber hinaus möglich, dass dem Nutzer und somit der natürlichen Person mittels dem Interaktionssymbol weitere Möglichkeiten der Interaktion dargeboten werden.

Durch das Interaktionssymbol wird somit ein visueller Wegweiser im visuellen Teil der Schnittstelle des Kommunikationssystems, der Anzeigeeinheit, dargeboten, um zumindest einen kleinen Teil standardisierbarer Interaktionsmöglichkeiten anzuzeigen.

Insbesondere können die Interaktionsmöglichkeiten mögliche Befehle, Informationen zum Gesprächszustand oder möglichen weiterführenden Themen enthalten.

Durch das vorgeschlagene Kommunikationssystem kann eine Kommunikation zwischen einem virtuellen Wesen und einer natürlichen Person flexibilisiert und mit größerer Variabilität durchgeführt werden. Fehlinterpretationen von einer Informationsdarstellung durch die natürliche Person können dadurch vermieden werden und gegebenenfalls können die Informationen von der natürlichen Person entsprechend abgerufen werden.

Vorzugsweise ist das Interaktionssymbol abhängig von einer Dialogsituation nach einem erreichten Dialogzustand zwischen dem virtuellen Wesen und der natürlichen Person auf der Anzeigeeinheit angezeigt. Indem das Interaktionssymbol nur bedarfsabhängig und situationsspezifisch angezeigt ist, kann zum einen eine unnötige und gegebenenfalls verwirrende Anzeige des Symbols auf der Anzeigeeinheit vermieden werden. Darüber hinaus kann eine Informationsüberfrachtung dadurch verhindert werden. Nicht zuletzt kann dadurch auch Anzeigefläche anderweitig genutzt werden, wenn das Interaktionssymbol nicht benötigt wird und dann auch nicht angezeigt wird.

Es kann vorgesehen sein, dass das Interaktionssymbol statisch angezeigt ist, insbesondere während seiner gesamten Zeitdauer der Anzeige statisch angezeigt ist.

Vorzugsweise ist vorgesehen, dass das Interaktionssymbol zumindest zeitweise während seiner gesamten Zeitdauer der Anzeige dynamisch angezeigt ist. Auch dadurch kann die Funktion des Interaktionssymbols individualisiert werden und darüber hinaus nochmals die Anzeige flexibilisiert und mit größerer Variabilität erfolgen. Denn durch eine dynamische Anzeige des Interaktionssymbols kann auf unterschiedliche Wichtigkeit der mit dem Interaktionssymbol zu vermittelnden Informationen hingewiesen werden. Unter einer dynamischen Anzeige des Interaktionssymbols wird beispielsweise eine blinkende Darstellung verstanden. Ebenso kann jedoch aber auch eine dynamische Änderung in der Farbdarstellung des Interaktionssymbols vorgesehen sein. Darüber hinaus kann unter einer dynamischen Anzeige auch eine Größenveränderlichkeit des angezeigten Interaktionssymbols ausgebildet sein. Nicht zuletzt kann die dynamische Anzeige eines Interaktionssymbols auch neben der bildhaften Darstellung akustisch unterstützt sein. Insbesondere kann vorgesehen sein, dass bei einer dynamischen Anzeige das Interaktionssymbol animiert ist, und beispielsweise eine Bewegung dahingehend erfolgt, dass es sich über die Anzeigefläche zumindest bereichsweise bewegen kann. In diesem Zusammenhang wird unter einer dynamischen Anzeige auch die ortsveränderliche Anzeige des Interaktionssymbols auf der Anzeigeeinheit verstanden.

Insbesondere kann vorgesehen sein, dass die dynamische Anzeige des Interaktionssymbols abhängig vom Fortgang des Dialogs zwischen dem virtuellen Wesen und der natürlichen Person veränderbar ist. In diesem Zusammenhang kann beispielsweise vorgesehen sein, dass zunächst beispielsweise ein Blinken des Interaktionssymbols erfolgt und abhängig vom Fortgang des Dialogs zusätzlich oder anstatt dazu auch eine Größenveränderlichkeit des Interaktionssymbols zumindest zeitweise stattfindet.

Insbesondere ist die Anzeigeart des Interaktionssymbols, eine statische oder eine dynamische Anzeige, abhängig von einem spezifischen Dialogzustand und/oder einer spezifischen Dialogsituation nach dem Erreichen eines Dialogzustands.

Unter einem Dialogzustand wird beispielsweise das zeitliche Voranschreiten eines geführten Dialogs verstanden. Dies ist jedoch lediglich beispielhaft und es können verschiedene andere Gegebenheiten einen Dialogzustand definieren. Selbstverständlich kann somit in diesem Zusammenhang ein Dialogzustand auch durch spezifische Arten des geführten Dialogs gegeben sein, wobei beispielsweise spezifische Fragen des virtuellen Wesens und/oder spezifische Fragen der natürlichen Person einen Dialogzustand definieren. Ebenso kann dies durch spezifische Antworten des virtuellen Wesens oder der natürlichen Person gegeben sein. Darüber hinaus kann ein Dialogzustand auch durch ein spezifisches Thema definiert sein. Abhängig davon, ob ein spezifischer Dialogzustand erreicht ist, wird dann im nachfolgenden Dialog von Dialogsituationen gesprochen, um diesbezüglich eine Abgrenzung zwischen den Begriffen Dialogzustand und Dialogsituation im vorliegenden Kontext der Anmeldung unterscheiden zu können.

Es kann vorgesehen sein, dass der Ort der Anzeige des Interaktionssymbols auf der Anzeigeeinheit variabel veränderbar ist. Dies kann insbesondere davon abhängen, ob und welche zusätzliche zu einem Interaktionssymbol vorhandenen Informationen angezeigt sind oder angezeigt werden sollen. Der Ort der Anzeige des Interaktionssymbols auf der Anzeigeeinheit ist somit vorzugsweise von den zusätzlich zu einem Interaktionssymbol gegenwärtig angezeigten und/oder den nachfolgend anzuzeigenden Informationen auf der Anzeigeeinheit abhängig. Auch hier soll somit eine Informationsüberfrachtung und somit eine unüberschaubare oder nur schlecht überschaubare Darstellung der Bildinformationen vermieden werden. Auch soll dadurch eine Verwirrung des Beobachters, insbesondere einer natürlichen Person verhindert werden.

Insbesondere ist ein Interaktionssymbol zur Signalisierung von zu einem Thema zusätzlich zu bereits mitgeteilten Informationen weiteren bereitgehaltenen Informationen oder zur Signalisierung einer Bereitschaftsfunktion eines Betriebszustands einer Aufnahmeeinheit des Kommunikationssystems zur Aufnahme von Sprachsignalen der natürlichen Person oder zur Änderung der Perspektive und/oder der Größe einer zusätzlich zum Interaktionssymbol bildhaft dargestellten Information ausgebildet. Das Interaktionssymbol kann beispielsweise ein Buchstabe oder ein Bild sein, mittels welchem angezeigt ist, dass weitere Informationen zu einem Thema oder zu einem momentan während des Dialogs angesprochenen Themenkomplexes bereitgestellt sind. Ebenso kann jedoch vorgesehen sein, dass das Interaktionssymbol ein Warnsymbol ist, welches beispielsweise in Form eines entsprechenden Straßenschildes ausgebildet und angezeigt ist, um den Nutzer auf einen wichtigen Hinweis hinzuweisen, den das virtuelle Wesen vortragen möchte.

Das virtuelle Wesen ist insbesondere ein Avatar.

Es kann auch vorgesehen sein, dass das Interaktionssymbol derart ausgestaltet ist, dass es eine Signalisierung dahingehend ermöglicht, dass ein momentaner Dialogschritt einen Link zu einem anderen bzw. weiteren Dialogschritt aufweist.

Ebenso kann das Interaktionssymbol beispielsweise zur Signalisierung einer Einstellungsmöglichkeit des Benutzers im Zusammenhang zu diesem momentanen Dialogschritt vorgesehen sein. Beispielsweise kann in diesem Fall das Symbol als Zahnrad dargestellt sein und zusätzlich der Hinweis aufleuchten "diesen Hinweis nicht mehr anzeigen". Darüber hinaus kann das Interaktionssymbol beispielsweise als Buch dargestellt sein, wobei durch diese Darstellung die Möglichkeit des Setzens eines Lesezeichens gegeben ist, so dass der angezeigte Inhalt als Lesezeichen markiert wurde oder um auf eine Liste von Lesezeichen zu verweisen.

Insbesondere ist das Interaktionssymbol dahingehend ausgebildet, dass es die Möglichkeit zur Änderung des Blickwinkels oder des Standpunkts bei einer Animation bietet. Diese Ausgestaltung kann somit beispielsweise als eine Zoomfunktion bereitgestellt sein, so dass durch Auswahl des Interaktionssymbols zusätzliche bildhaft dargestellte Informationen vergrößert oder verkleinert dargestellt werden können und darüber hinaus auch noch die Perspektive geändert werden kann. Beispielsweise kann in diesem Zusammenhang ein dreidimensional dargestelltes Objekt zumindest in einer Raumrichtung gedreht werden und somit die Betrachtungsperspektive geändert werden.

Ebenso kann das Interaktionssymbol als Mikrofon dargestellt sein, wobei in diesem Zusammenhang die Bereitschaftsfunktion eines Betriebszustands einer Aufnahmeeinheit dargestellt werden soll. Diesbezüglich wird die Aufnahmebereitschaft des Avatarsystems während der Spracherkennung angezeigt.

Es kann auch vorgesehen sein, dass ein Interaktionssymbol zur Signalisierung einer Frage oder eines Befehls des virtuellen Wesens an die natürliche Person ausgebildet ist. Sehr einfach und intuitiv nachvollziehbar kann in diesem Zusammenhang das Interaktionssymbol beispielsweise ein Fragezeichen oder ein Rufzeichen sein.

Ebenso können Ausgestaltungen des Interaktionssymbols vorgesehen sein, welche das Wiederholen von unmittelbar vorher sprachlich mitgeteilten Informationen des virtuellen Wesens nochmals sprachlich und/oder in angezeigter Textform wiederholt ermöglichen. Hier können entsprechende Pfeilsymbole diese Funktionalität symbolisieren. Ebenso kann durch Pfeilsymbole die Funktion "weiter" oder "zurück" ausgebildet sein. In diesem Zusammenhang kann die Funktion, zum nachfolgenden Schritt zu springen bzw. die Funktion, zu einem zuvor dargestellten Schritt zu springen, ermöglicht werden. Ebenso kann durch Pfeilsymbole die Funktion "nach oben" oder "nach unten", um in den übergeordneten Gesprächskontext bzw. in den untergeordneten Gesprächskontext zu springen, symbolisiert sein.

Vorzugsweise umfasst das Kommunikationssystem mehrere Interaktionssymbole, insbesondere einen Satz von unterschiedlichen Interkommunikationssymbolen. Vorzugsweise sind mehrere Interaktionssymbole zumindest zeitweise gleichzeitig auf der Anzeigeeinheit anzeigbar.

Insbesondere ist die Anzahl und/oder welche der Interaktionssymbole auf der Anzeigeeinheit darstellbar sind oder dargestellt werden sollen, abhängig von einem spezifischen Dialogzustand und/oder einer spezifischen Dialogsituation nach einem Erreichen eines spezifischen Dialogzustands veränderbar. Durch diese Ausgestaltung kann somit ein hoch dynamisches System im Hinblick auf die Kommunikationsunterstützung für einen natürlich sprachlichen Nutzer in Form einer natürlichen Person unterstützt werden. Vielfältigste Möglichkeiten zur Kommunikationsführung im Hinblick auf die Individualität, als auch im Hinblick auf die korrekte und fehlerfreie Informationserhaltung für die natürliche Person kann dadurch ermöglicht werden.

Insbesondere ist das angezeigte Interaktionssymbol als Bedienelement ausgebildet, welches auswählbar ist. Beispielsweise kann das Interaktionssymbol durch manuelles Berühren beispielsweise mit einem Finger der natürlichen Person ausgewählt und die damit verbundene Funktion oder die damit verbundene Informationspräsentation durchgeführt werden. Insbesondere dann, wenn die Anzeigeeinheit eine berührsensitive Fläche aufweist, kann das Interaktionssymbol an der entsprechenden Stelle dargestellt sein und durch Berühren ausgewählt werden. Selbstverständlich kann jedoch auch hier vorgesehen sein, dass die Auswahl oder die Aktivierung des Interaktionssymbols durch Sprachsignale erfolgt.

Insbesondere ist das Kommunikationssystem für ein Fahrzeug ausgebildet und die Anzeigeeinheit ist in einem Fahrzeug angeordnet. Vorzugsweise ist eine natürliche Person ein Fahrzeuginsasse. Es kann vorgesehen sein, dass die Anzeigeeinheit ortsfest in dem Fahrzeug angeordnet ist. Ebenso kann jedoch auch vorgesehen sein, dass die Anzeigeeinheit lösbar in dem Fahrzeug angeordnet ist und als tragbare Einheit ausgebildet ist, welche auch nach dem Verlassen des Fahrzeugs vom Fahrzeuginsassen mitgeführt bzw. mitgetragen werden kann. Eine Kommunikation kann dann auch außerhalb des Fahrzeugs fortgeführt oder begonnen werden.

Selbstverständlich kann die Anzeige zumindest eines Interaktionssymbols auf der Anzeigeeinheit auch abhängig vom Betriebszustand eines Fahrzeugs sein, wenn das Kommunikationssystem für ein Fahrzeug ausgebildet ist. Gerade in kritischen Situationen oder abhängig von der Fahrzeuggeschwindigkeit kann dann die Anzeige des Interaktionssymbols unterbleiben oder eben erfolgen. Gegebenenfalls kann diesbezüglich vorgesehen sein, dass ab einer bestimmten Fahrzeuggeschwindigkeit die bildhafte Darstellung des Interaktionssymbols nicht mehr erfolgt oder vorzugsweise durch akustische Signale unterstützend dargestellt wird.

Bei dem erfindungsgemäßen Verfahren zur Darstellung von Informationen bei einer Kommunikation zwischen einem virtuellen Wesen mit einer natürlichen Person wird das virtuelle Wesen auf einer Anzeigeeinheit eines Kommunikationssystems visuell angezeigt. Auf der Anzeigeeinheit wird zumindest ein Interaktionssymbol visuell angezeigt, mittels welchem der natürlich sprachliche Dialog zwischen dem virtuellen Wesen und der natürlichen Person derart unterstützt wird, dass ein erreichter Dialogzustand angezeigt wird und/oder abhängig vom erreichten Dialogzustand zusätzlich Informationen und/oder Informationen redundant abgerufen werden können.

Bei einem Dialog zwischen der natürlichen Person und dem virtuellen Wesen kann beispielsweise insbesondere eine Betriebsanleitung oder eine Bedienungsanleitung für eine Komponente eines Fahrzeugs dargestellt werden. Gerade hier ist es besonders sinnvoll den richtigen Fortgang der Bedienungsanleitung zu verstehen und exakt mit den jeweils nachfolgenden Schritten verstehen zu können. Gerade hier ist es somit besonders wichtig, dass abhängig von spezifischen Dialogzuständen und somit abhängig von spezifisch erreichten Zuständen der Bedienungsanleitung spezifische zusätzliche Informationen angezeigt oder wiederholt abgerufen werden können.

Vorteilhafte Ausgestaltungen des erfindungsgemäßen Kommunikationssystems sind als vorteilhafte Ausgestaltungen des erfindungsgemäßen Verfahrens anzusehen.

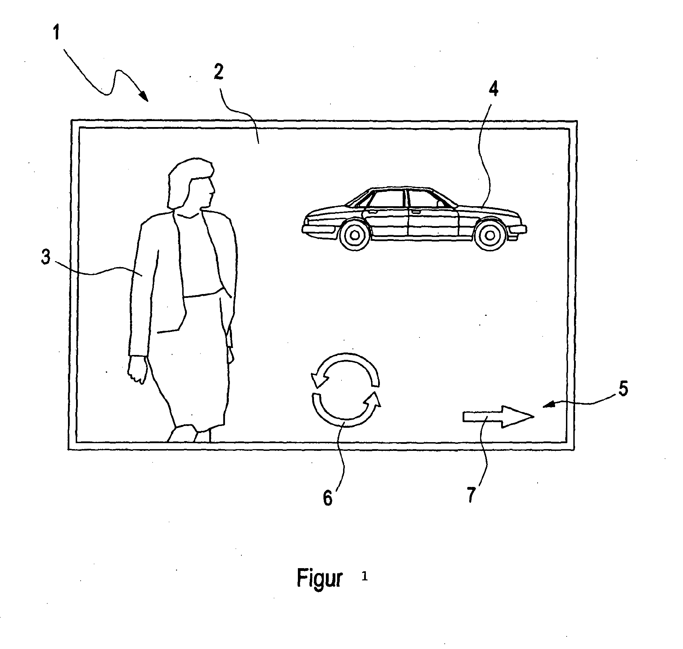

Ein Ausführungsbeispiel der Erfindung wird nachfolgend anhand einer schematischen Zeichnung näher erläutert. Die einzige Figur zeigt eine beispielhafte Anzeige auf einer Anzeigeeinheit eines Kommunikationssystems.

Das Kommunikationssystem 1 umfasst eine Anzeigeeinheit 2, welche in einem Fahrzeug, insbesondere in einem Kraftfahrzeug, angeordnet ist. Die Anzeigeeinheit 2 kann darüber hinaus auch beispielsweise einem Infotainmentsystem des Fahrzeugs zugeordnet sein, und es können beispielsweise auch Navigationsdaten, Videos, Audioinformationen und dergleichen darstellbar sein.

Die Anzeigeeinheit 2 ist im Ausführungsbeispiel ortsfest im Fahrzeug angeordnet.

Ebenso kann vorgesehen sein, dass die Anzeigeeinheit 2 lösbar angeordnet ist und somit auch zur mobilen Verwendung außerhalb des Fahrzeugs ausgebildet ist. Vorzugsweise umfasst die Anzeigeeinheit 2 dann auch eine Steuereinheit, welche zur Auswertung von empfangenen Signalen ausgebildet ist und zur Steuerung der anzuzeigenden Information auf der Anzeigeeinheit 2 ausgebildet ist. Die Anzeigeeinheit 2 umfasst bei einer derartigen Ausgestaltung, bei der sie auch als mobil und tragbar ausgebildet ist, vorzugsweise auch eine Sende- und/oder Empfangseinheit zum Senden und/oder Empfangen von akustischen Signalen, insbesondere Sprachsignalen.

Im vorliegenden Ausführungsbeispiel ist das Kommunikationssystem 1 zur Durchführung eines natürlich sprachlichen Dialogs zwischen einer natürlichen Person und dem System ausgebildet. Die Hardware des Kommunikationssystems 1 ist zur Aussendung von Sprachsignalen als auch zum Empfangen von Sprachsignalen ausgebildet.

Das Kommunikationssystem 1 umfasst ein virtuelles Wesen in Form eines Avatars 3, welcher auf der Anzeigeeinheit 2 in der Kommunikationssituation gemäß der Darstellung in der Figur angezeigt ist. Der Avatar 3 ist zur Präsentation von Informationen oder zur unterstützenden Präsentation von Informationen ausgebildet und kann sich entsprechend bewegen bzw. örtlich auf der Anzeigeeinheit 2 bewegen.

Darüber hinaus ist auf der Anzeigeeinheit 2 ein Fahrzeug 4 dargestellt, wobei in diesem Zusammenhang durch die Präsentation der Informationen eine Bedienungsanleitung einer Komponente des Fahrzeugs 4 durch natürlich sprachlichem Dialog zwischen dem Avatar 3 und einer natürlichen Person dargelegt werden soll.

Auf der Anzeigeeinheit 2 sind in einem rechten unteren Bereich 5 ein erstes Interaktionssymbol 6 und ein zweites Interaktionssymbol 7 gezeigt. Die beiden Interaktionssymbole 6 und 7 sind visuell auf der Anzeigeeinheit 2 dargestellt und mittels diesen Interaktionssymbolen 6 und 7 ist der natürlich sprachliche Dialog zwischen dem virtuellen Wesen bzw. dem Avatar 3 und der natürlichen Person, insbesondere dem Fahrzeuginsassen, unterstützt. Mittels den Interaktionssymbolen 6 und 7 kann insbesondere ein erreichter Dialogzustand zwischen dem Avatar 3 und der natürlichen Person angezeigt werden und/oder abhängig vom erreichten Dialogzustand zusätzliche Informationen und/oder Informationen redundant abgerufen werden. So kann in diesem Zusammenhang eine redundante Informationsdarbietung durch das Interaktionssymbol 6 ermöglicht werden, welches das Wiederholen der eben vorher gesagten Informationen des Avatars 3 ermöglicht.

Darüber hinaus ermöglicht das zweite Interaktionssymbol 7 gemäß der Pfeildarstellung die Möglichkeit zum nachfolgenden Bedienschritt zu springen.

Beide Interaktionssymbole 6 und 7 können beispielsweise durch Berühren der Anzeigeeinheit 2 an der entsprechenden Position durch beispielsweise einen Finger der natürlichen Person aktiviert und die damit verbundene Funktion gestartet werden. Es kann jedoch auch vorgesehen sein, dass die Interaktionssymbole 6 und 7 durch spezifische Sprachsignale ausgewählt und die entsprechenden damit verknüpften Funktionen aktiviert werden. So kann beispielsweise vorgesehen sein, dass durch ein Sprachsignal "wiederholen" das erste Interaktionssymbol 6 ausgewählt wird und die damit verbundene Funktion gestartet wird. Entsprechend kann beispielsweise durch ein Sprachsignal "weiter" das zweite Interaktionssymbol 7 ausgewählt werden.

Im gezeigten Ausführungsbeispiel sind die Interaktionssymbole 6 und 7 in einem Bereich 5 der Anzeigeeinheit 2 angezeigt, welche nicht störend im Hinblick auf die Anzeige des Avatars 3 und des Fahrzeugs 4 sind.

Sowohl die Anzahl als auch der Ort der Interaktionssymbole 6 und 7 ist lediglich beispielhaft.

Insbesondere ist vorgesehen, dass die Anzahl von Interaktionssymbolen 6 und 7 und/oder der Ort der Interaktionssymbole 6 und 7, auf welchem sie auf der Anzeigeeinheit 2 angezeigt werden, als auch die Anzeigeart, wie die Interaktionssymbole 6 und 7 angezeigt werden, abhängig von einer Dialogsituation nach einem erreichten Dialogzustand zwischen dem Avatar 3 und der natürlichen Person ist.

So kann vorgesehen sein, dass zumindest eines der Interaktionssymbole 6 und 7 abhängig von einem Dialogzustand und/oder einer Dialogsituation nach einem erreichten Dialogzustand zumindest zeitweise während der gesamten Zeitdauer der Anzeige statisch oder zumindest zeitweise während einer gesamten Zeitdauer der Anzeige dynamisch angezeigt ist.

Es kann auch vorgesehen sein, dass der Ort 5, an dem die Interaktionssymbole 6 und 7 angezeigt werden, variabel veränderbar ist, wobei in diesem Zusammenhang die örtliche Verschiebung der Interaktionssymbole 6 und 7 auf der Anzeigeeinheit 2 abhängig von den zusätzlich zu dem Interaktionssymbol gegenwärtig angezeigten Informationen, insbesondere dem Avatar und dem Fahrzeug 4, und/oder von den nachfolgend anzuzeigenden Informationen ist. In dem Zusammenhang kann beispielsweise vorgesehen sein, dass auf der Anzeigeeinheit 2 nachfolgend neben dem Avatar 3 und dem Fahrzeug 4 eine spezifische Komponente des Fahrzeugs 4, welche nachfolgend in ihrer Betriebsweise erläutert werden soll, angezeigt wird.

Selbstverständlich kann auch vorgesehen sein, dass ein Interaktionssymbol 6 bzw. 7 abhängig von der anzuzeigenden Information veränderbar ist. So kann beispielsweise vorgesehen sein, dass ein Interaktionssymbol ein sich dynamisch in seiner Länge verändernder Balken oder eine Säule ist, so dass auch hier eine hohe Variabilität und Nachvollziehbarkeit gegeben ist. Die Interaktionssymbole 6 und 7 können im Hinblick auf ihre dynamische Veränderbarkeit in ihrer Größe und/oder in ihrer Farbe veränderbar sein. Darüber hinaus können sie auch animiert sein und sich beispielsweise drehen oder blinken oder dergleichen.

## Patentansprüche

1. Kommunikationssystem mit einer Anzeigeeinheit (2) und einem virtuellen Wesen (3), welches auf der Anzeigeeinheit (2) visuell darstellbar ist und zur Kommunikation mittels natürlicher Sprache mit einer natürlichen Person ausgebildet ist,
**gekennzeichnet durch**
zumindest ein Interaktionssymbol (6, 7), welches auf der Anzeigeeinheit (2) visuell darstellbar ist und mittels welchem der natürlichsprachliche Dialog zwischen dem virtuellen Wesen (3) und der natürlichen Person unterstützt ist derart, dass ein erreichter Dialogzustand anzeigbar ist und/oder abhängig vom erreichten Dialogzustand zusätzliche Informationen und/oder Informationen redundant abrufbar sind.

2. Kommunikationssystem nach Anspruch 1,
**dadurch gekennzeichnet, dass**
das Interaktionssymbol (6, 7) abhängig von einer Dialogsituation nach einem erreichten Dialogzustand zwischen dem virtuellen Wesen (3) und der natürlichen Person auf der Anzeigeeinheit (2) angezeigt ist.

3. Kommunikationssystem nach Anspruch 1 oder 2,
**dadurch gekennzeichnet, dass**
das Interaktionssymbol (6, 7) statisch, insbesondere während seiner gesamten Zeitdauer der Anzeige statisch, angezeigt ist.

4. Kommunikationssystem nach einem der vorhergehenden Ansprüche,
**dadurch gekennzeichnet, dass**
das Interaktionssymbol (6, 7) zumindest zeitweise während seiner gesamten Zeitdauer der Anzeige dynamisch angezeigt ist.

5. Kommunikationssystem nach Anspruch 3 oder 4,
**dadurch gekennzeichnet, dass**
die Anzeigeart des Interaktionssymbols (6, 7) abhängig von einem spezifischen Dialogzustand und/oder einer spezifischen Dialogsituation nach dem Erreichen eines Dialogzustands ist.

6. Kommunikationssystem nach einem der vorhergehenden Ansprüche,
**dadurch gekennzeichnet, dass**
der Ort der Anzeige des Interaktionssymbols (6, 7) auf der Anzeigeeinheit (2) variabel veränderbar ist.

7. Kommunikationssystem nach Anspruch 6,
**dadurch gekennzeichnet, dass**
der Ort (5) der Anzeige des Interaktionssymbols (6, 7) auf der Anzeigeeinheit (2) abhängig von den zusätzlich zu dem Interaktionssymbol (6, 7) gegenwärtig angezeigten und/oder den nachfolgend zusätzlich anzuzeigenden Informationen ist.

8. Kommunikationssystem nach einem der vorhergehenden Ansprüche,
**dadurch gekennzeichnet, dass**
ein Interaktionssymbol (6, 7) zur Signalisierung von zu einem Thema zusätzlich zu den bereits mitgeteilten Informationen weiteren bereitgehaltenen Informationen oder zur Signalisierung einer Bereitschaftsfunktion eines Betriebszustands einer Aufnahmeeinheit des Kommunikationssystems (1) zur Aufnahme von Sprachsignalen der natürlichen Person oder zur Änderung der Perspektive und/oder der Größe einer zusätzlich zum Interaktionssymbols (6, 7) bildhaft dargestellten Information ausgebildet ist.

9. Kommunikationssystem nach einem der vorhergehenden Ansprüche,
**dadurch gekennzeichnet, dass**
ein Interaktionssymbol (6, 7) zur Signalisierung einer Frage oder eines Befehls des virtuellen Wesens (3) an die natürliche Person ausgebildet ist.

10. Kommunikationssystem nach einem der vorhergehenden Ansprüche,
**dadurch gekennzeichnet, dass**
mehrere Interaktionssymbole (6, 7) zumindest zeitweise gleichzeitig auf der Anzeigeeinheit (2) anzeigbar sind.

11. Kommunikationssystem nach Anspruch 10,
**dadurch gekennzeichnet, dass**
die Anzahl und/oder welche Interaktionssymbole (6, 7), welche auf der Anzeigeeinheit (2) darstellbar sind, abhängig von einem spezifischen Dialogzustand und/oder einer spezifischen Dialogsituation nach einem spezifischen Dialogzustand veränderbar ist.

12. Kommunikationssystem nach einem der vorhergehenden Ansprüche,
**dadurch gekennzeichnet, dass**
das angezeigte Interaktionssymbol (6, 7) als Bedienelement ausgebildet ist, welches auswählbar ist.

13. Kommunikationssystem nach einem der vorhergehenden Ansprüche,
**dadurch gekennzeichnet, dass**
die Anzeigeeinheit (2) in einem Fahrzeug angeordnet ist und die natürliche Person ein Fahrzeuginsasse ist.

14. Verfahren zur Darstellung von Informationen bei einer Kommunikation zwischen einem virtuellen Wesen (3) mit einer natürlichen Person, bei welchem das virtuelle Wesen (3) auf einer Anzeigeeinheit (2) eines Kommunikationssystems (1) visuell angezeigt wird,
**dadurch gekennzeichnet, dass**
auf der Anzeigeeinheit (2) zumindest ein Interaktionssymbol (6, 7) visuell angezeigt wird, mittels welchem der natürlichsprachliche Dialog zwischen dem virtuellen Wesen (3) und der natürlichen Person derart unterstützt wird, dass ein erreichter Dialogzustand angezeigt wird und/oder abhängig vom erreichten Dialogzustand zusätzliche Informationen und/oder Informationen redundant abgerufen werden können.

## Claims

1. Communication system having a display unit (2) and a virtual being (3) that can be visually represented on the display unit (2) and is designed to communicate with a real person by natural speech,
**characterised by**
at least one interaction symbol (6, 7) that can be visually represented on the display unit (2) and by means of which the natural-speech dialogue between the virtual being (3) and the real person is assisted such that a dialogue state that has been achieved can be displayed and/or, depending on the dialogue state achieved, additional information and/or information can be retrieved in a redundant manner.

2. Communication system according to claim 1, **characterised in that** the interaction symbol (6, 7) is displayed on the display unit (2) depending on a dialogue situation, after a dialogue state has been achieved between the virtual being (3) and the real person.

3. Communication system according to claim 1 or 2, **characterised in that** the interaction symbol (6, 7) is displayed statically, in particular is displayed statically for the entire duration of the display thereof.

4. Communication system according to any of the preceding claims, **characterised in that** the interaction symbol (6, 7) is displayed dynamically at least intermittently for the entire duration of the display thereof.

5. Communication system according to claim 3 or 4, **characterised in that** the nature of the display of the interaction symbol (6, 7) is dependent on a specific dialogue state and/or a specific dialogue situation after a dialogue state has been achieved.

6. Communication system according to any of the preceding claims, **characterised in that** the location of the display of the interaction symbol (6, 7) on the display unit (2) is variably changeable.

7. Communication system according to claim 6, **characterised in that** the location (5) of the display of the interaction symbol (6, 7) on the display unit (2) is dependent on the information currently displayed in addition to the interaction symbol (6, 7) and/or on the information to be additionally displayed subsequently.

8. Communication system according to any of the preceding claims, **characterised in that**
an interaction symbol (6, 7) is configured to signal further information held on a subject in addition to the information already imparted, or to signal a readiness function of an operating state of a recording unit of the communication system (1) for recording speech signals from the real person or for changing the perspective and/or size of information displayed graphically in addition to the interaction symbol (6, 7).

9. Communication system according to any of the preceding claims, **characterised in that** an interaction symbol (6, 7) is configured to signal a question or a command from the virtual being (3) to the real person.

10. Communication system according to any of the preceding claims, **characterised in that** a plurality of interaction symbols (6, 7) can be displayed simultaneously on the display unit (2) at least intermittently.

11. Communication system according to claim 10, **characterised in that** the number of and/or which interaction symbols (6, 7) which can be displayed on the display unit (2) is variable depending on a specific dialogue state and/or a specific dialogue situation after a specific dialogue state.

12. Communication system according to any of the preceding claims, **characterised in that** the interaction symbol (6, 7) displayed is configured as an operating element that is selectable.

13. Communication system according to any of the preceding claims, **characterised in that** the display unit (2) is arranged in a vehicle and the real person is an occupant of the vehicle.

14. Method for displaying information in a communication between a virtual being (3) and a real person, wherein the virtual being (3) is displayed visually on a display unit (2) of a communication system (1),
**characterised in that**
on the display unit (2) at least one interaction symbol (6, 7) is visually displayed, by means of which the natural-speech dialogue between the virtual being (3) and the natural person is assisted such that a dialogue state that has been achieved is displayed and/or, depending on the dialogue state achieved, additional information and/or information can be retrieved in a redundant manner.

## Revendications

1. Système de communication équipé d'une unité d'affichage (2) et d'un être virtuel (3) qui peut être représenté visuellement sur l'unité d'affichage (2) et qui est conçu pour la communication au moyen d'un langage naturel avec une personne physique, **caractérisé par** au moins un symbole d'interaction (6, 7) qui peut être représenté visuellement sur l'unité d'affichage (2) et au moyen duquel le dialogue de langage naturel entre l'être virtuel (3) et la personne physique est assisté de telle manière qu'un état de dialogue atteint puisse être affiché et/ou que, en fonction de l'état de dialogue atteint, des informations supplémentaires et/ou des informations puissent être appelées de manière redondante.

2. Système de communication selon la revendication 1,
**caractérisé en ce que**
le symbole d'interaction (6, 7) est affiché sur l'unité d'affichage (2) en fonction d'une situation de dialogue après un état de dialogue atteint entre l'être virtuel (3) et la personne physique.

3. Système de communication selon la revendication 1 ou 2,
**caractérisé en ce que**
le symbole d'interaction (6, 7) est affiché de manière statique, en particulier de manière statique durant la durée totale de son affichage.

4. Système de communication selon l'une quelconque des revendications précédentes, **caractérisé en ce que** le symbole d'interaction (6, 7) est affiché de manière dynamique au moins par moments durant la durée totale de son affichage.

5. Système de communication selon la revendication 3 ou 4,
**caractérisé en ce que**
le type d'affichage du symbole d'interaction (6, 7) est fonction d'un état de dialogue spécifique et/ou d'une situation de dialogue spécifique après qu'un état de dialogue a été atteint.

6. Système de communication selon l'une quelconque des revendications précédentes, **caractérisé en ce que** la position de l'affichage du symbole d'interaction (6, 7) sur l'unité d'affichage (2) peut être modifiée de différentes manières.

7. Système de communication selon la revendication 6,
**caractérisé en ce que**
la position (5) de l'affichage du symbole d'interaction (6, 7) sur l'unité d'affichage (2) est fonction des informations présentement affichées en plus du symbole d'interaction (6, 7) et/ou des informations à afficher en plus par la suite.

8. Système de communication selon l'une quelconque des revendications précédentes, **caractérisé en ce que** un symbole d'interaction (6, 7) est conçu pour la signalisation d'autres informations, déjà disponibles sur un thème, en plus des informations déjà communiquées ou pour la signalisation d'une fonction de disponibilité d'un état de fonctionnement d'une unité d'enregistrement du système de communication (1) en vue d'enregistrer des signaux vocaux de la personne physique ou en vue de la modification de la perspective et/ou de la taille d'une information représentée sous forme imagée en plus du symbole d'interaction (6, 7).

9. Système de communication selon l'une quelconque des revendications précédentes, **caractérisé en ce que** un symbole d'interaction (6, 7) est conçu pour la signalisation d'une question ou d'une commande de l'être virtuel (3) à l'intention de la personne physique.

10. Système de communication selon l'une quelconque des revendications précédentes, **caractérisé en ce que** plusieurs symboles d'interaction (6, 7) peuvent être affichés au moins par moments simultanément sur l'unité d'affichage (2).

11. Système de communication selon la revendication 10, **caractérisé en ce que**
le nombre et/ou le type de symboles d'interaction (6, 7), qui peuvent être représentés sur l'unité d'affichage (2), peuvent être modifiés après un état de dialogue spécifique en fonction d'un état de dialogue spécifique et/ou d'une situation de dialogue spécifique.

12. Système de communication selon l'une quelconque des revendications précédentes, **caractérisé en ce que** le symbole d'interaction (6, 7) affiché est conçu en tant qu'élément de commande qui peut être sélectionné.

13. Système de communication selon l'une quelconque des revendications précédentes, **caractérisé en ce que** l'unité d'affichage (2) est disposée dans un véhicule et que la personne physique est un occupant du véhicule.

14. Procédé de représentation d'informations lors d'une communication entre un être virtuel (3) et une personne physique, dans le cadre duquel l'être virtuel (3) est affiché visuellement sur une unité d'affichage (2) d'un système de communication (1),
**caractérisé en ce que**
sur l'unité d'affichage (2) est affiché visuellement au moins un symbole d'interaction (6, 7) au moyen duquel le dialogue de langage naturel entre l'être virtuel (3) et la personne physique est assisté de telle manière qu'un état de dialogue atteint soit affiché et/ou que, en fonction de l'état de dialogue atteint, des informations supplémentaires et/ou des informations puissent être appelées de manière redondante.
